# EUROPEAN PATENT SPECIFICATION

(11) **EP 0 908 301 B1**
(45) Date of publication and mention of the grant of the patent: **05.07.2006**
(21) Application number: 97916642.8
(22) Date of filing: 10.04.1997
(51) Int. Cl.: B32B 15/08, B32B 37/00

(54) **METALLIC SHEET COVERED WITH A POLYESTER RESIN FILM AND HAVING HIGH WORKABILITY, AND METHOD OF MANUFACTURING THE SAME**
METALLBLECH, DAS MIT EINER POLYESTERHARZFOLIE BESCHICHTET IST UND EINE GUTE BEARTBEITBARKEIT AUFWEIST, UND HERSTELLUNGSVERFAHREN DAFÜR
FEUILLE METALLIQUE RECOUVERTE D'UN FILM DE RESINE POLYESTER ET POSSEDANT DE BONNES CARACTERISTIQUES D'EXPLOITATION, ET PROCEDE DE SON FABRICATION

(30) Priority: 10.04.1996 JP 11212796
(43) Date of publication of application: 14.04.1999
(73) Proprietor: TOYO KOHAN Co., Ltd, Tokyo 100 (JP)
(72) Inventor: IWASHITA, Hiroyuki, Toyo Kohan Co., Ltd., Kudamatsu-shi Yamaguchi-ken 744 (JP); GOTOH,Fumiko, Toyo Kohan Co., Ltd., Kudamatsu-shi, Yamaguchi-Ken 744 (JP); TANAKA,Atsuo, Toyo Kohan Co., Ltd., Kudamats-shi Yamaguchi-Ken 744 (JP)
(74) Representative: Vossius & Partner
(86) International application number: PCT/JP1997/001242
(87) International publication number: WO 1997/037846

(56) References cited:
- WO-A-94/21457
- JP-A- 1 180 336
- JP-A- 2 155 642
- PATENT ABSTRACTS OF JAPAN vol. 013, no. 462 (M-881), 19 October 1989 (1989-10-19) & JP 01 180336 A (NIPPON STEEL CORP), 18 July 1989 (1989-07-18)

## Description

The present invention relates to polyester resin covered metal sheet having remarkably excellent formability, which is applicable to heavily formed use such as drawing, drawing and ironing, drawing and stretch forming, and ironing after drawing and stretch forming, and production method thereof.

Metal containers such as beverage cans or battery containers are formed by drawing, drawing and ironing, drawing and stretch forming, or ironing after drawing and stretch forming with the object of material reduction and extension of inside dimension by reduction of wall thickness of container. These metal containers are generally coated to give corrosion resistance for content or printed after being coated to show content. However, a metal sheet previously covered with organic resin is tried to apply to above- mentioned heavily formed use with a view to reduce coating cost and to eliminate environmental pollution caused by dispersing of solvent during coating operation. Cans formed of metal sheet covered with organic resin have already been placed on sale in beverage can market.

In the organic resin covered metal sheet applied to the above- mentioned heavily formed use, a biaxially oriented film, which is manufactured by biaxial elongation of a thermoplastic polyester resin and subsequent heat- setting of it, is heat bonded to a metal sheet. When the mechanical characteristics of these biaxially oriented films are measured using a tensile tester, the general characteristic is large yield strength and small elongation (elongation after fracture). In case where such a biaxially oriented film is laminated on a metal sheet with adhesive but without heat bonding in order not to destroy the biaxial orientation and the laminate is formed by severe forming described above, the resin film is fractured or numerous cracks are generated in the portion that is heavily formed because of the small elongation. Furthermore, in case where the adhesion is poor, the resin film is peeled off when the laminate is formed. For this reason, in the organic resin covered metal sheet for the use of the above―described severe forming, the biaxial orientation of the film that the film had before the lamination is partially or entirely lost by the heat caused when the film is heat bonded to the metal sheet in the lamination of the biaxially oriented film on the metal sheet using heat bonding method. As a result, the yield strength of the film after being laminated on the metal sheet is decreased and the elongation is improved, which prevents peeling―off or fracture of the film, or the generation of film cracks in the forming operation. On the other hand, the film without orientation has so large permeability that the content permeates the film and corrodes the metal substratum, and furthermore, it has faults that coarse spherlites are generated in the film by post heating during the operation of printing which shows the content or the like and cracks are easily caused in the film by falling of container or collision of each container.

Therefore, in the metal sheet covered with polyester resin film having biaxial orientation applied to the above-mentioned heavily formed use, the elongation after fracture of the film before being laminated on the metal sheet is defined in the preferable range (Laid open Japanese patent Hei 1- 249331), or the range of the orientation coefficient which shows the degree of the biaxial orientation before being laminated on the metal sheet, or the preferable range of the elongation after fracture and the tensile strength of the film are defined (Laid open Japanese patent Hei 2-70430).

However, the values of the elongation after fracture, or the elongation after fracture and the tensile strength of the film disclosed in Laid open Japanese patent Hei 1-249331 and Laid open Japanese patent Hei 2- 74030 are those before the film is laminated on the metal sheet.

In case where such a biaxially oriented resin film is laminated on a metal sheet using heat bonding method, the biaxial orientation is destroyed, which makes the value of the elongation after fracture and the tensile strength change. Therefore, the films after lamination laminated on the different conditions may not have favorable biaxial orientation and favorable elongation and tensile strength of the film, and the polyester resin film covered metal sheet disclosed in Laid open Japanese patent Hei 1-249331 and Laid open Japanese patent Hei 2-74030 can not be favorably formed in some cases. WO 94/21457 describes a specific process and apparatus for producing laminated materials in which one or more polymer films are laminated to a metal strip by a combination of heat and pressure. A specific composite steel is described in JP-A-11/80336. A tin film is provided on the surface of a steel plate becoming the outer surface of a can at a can manufacturing time and a chemical forming treatment film is provided on the other surface of the steel plate becoming the inner surface of the can and a polybutylene terephthalate film is thermally bonded to the upper surface of the chemical forming treatment film at temperatures of the melting point or more thereof to be immediately quenched.

It is the objective of the present invention to produce a polyester resin film covered metal sheet having extremely excellent formability which can be applied to severely formed use such as drawing, drawing and ironing, drawing and stretch forming, or ironing after drawing and stretch forming.

Metal sheet covered with polyester resin film having biaxial orientation of the present invention is one, wherein said polyester resin film having biaxial orientation, obtained from said metal sheet covered with a polyester resin film having biaxial orientation by chemically dissolving only said metal sheet has a true stress of 3.0 to 15.0 kg/mm ² measured at 75 °C, corresponding to a true strain of 1.0, in the mechanical characteristics. It has a characteristic that said polyester resin is polyethylene terephthalate resin. It has further a characteristic that said polyethylene terephthalate resin is a polyethylene terephthalate resin having a low temperature crystallization temperature of 130 to 165 °C, preferably 140 to 155 °C. It has also further a characteristic that said polyester resin is a copolyester resin mainly consisting of ethylene terephthalate recurring units, a copolyester resin mainly consisting of butylene terephthalate recurring units, or a blended copolyester resin consisting of at least 2 of these resins, or a double layered polyester resin consisting of a laminate of at least 2 of these resins. Furthermore, the method of preparing the above-mentioned metal sheet covered with a polyester resin film having biaxial orientation of the present invention is one, wherein said metal sheet is cooled by a nip formed by a pair of laminating rolls at a cooling rate of 600 °C/second or more when a biaxially oriented polyester resin film is contacted with said metal sheet heated to a temperature of more than the melting temperature of said polyester resin and both said metal sheet and said polyester resin film are pinched and pressed into a laminate by said pair of laminating rolls.

The present invention is a metal sheet covered with a polyester resin film having biaxial orientation manufactured in the manner in which the metal sheet is cooled by a pair of laminating rolls at a cooling rate of 600 °C/second or more when a biaxially oriented polyester resin film is contacted with one side or both sides of the metal sheet heated to a temperature of more than the melting temperature of the polyester resin and both said metal sheet and said polyester resin film are pinched and pressed into a laminate by the pair of laminating rolls, wherein the biaxially oriented polyester resin film is heat bonded to the metal sheet, so that the polyester resin film having biaxial orientation obtained from the metal sheet covered with a polyester resin film having biaxial orientation by chemically dissolving only said metal sheet, has a true stress of 3.0 to 15.0 kg/mm² measured at 75 °C, corresponding to a true strain of 1.0, in the mechanical characteristics. The polyester resin used in the present invention is preferably polyethylene terephthalate, one having a low temperature crystallization temperature of 130 to 165 °C in particular, or copolyester resin consisting of ethylene terephthalate and ethylene isophthalate. The lamination of such a biaxially oriented polyester resin film on a metal sheet using the above―described heat bonding method enables to prevent peeling―off of the film, fracture of the film and occurrence of film cracks during the forming in the severe forming use, destroying part of or whole biaxial orientation by heat conducted from the metal sheet when the film is heat bonded to the metal sheet, decreasing yield strength of the film after the lamination and improving elongation of it.

Hereinafter, the present invention is explained in detail referring to specific embodiments. At first, the polyester resin film used in the present invention is preferably that of polyethylene terephthalate biaxially oriented in the lengthwise and the widthwise directions having a low temperature crystallization temperature ranging from 130 to 165 °C in particular, more preferably from 140 to 155 °C. A low temperature crystallization temperature is explained hereinafter. When an amorphous polyester resin such as polyethylene terephthalate which is obtained by heating it to a temperature of more than the melting temperature of it and quenching immediately after that is gradually heated using a differential scanning calorimeter (DSC), an exothermic peak appears in the temperature range of 100 to 200 °C depending on the resin composition. The resin of which the exothermic peak appears at a higher temperature has a smaller crystallization velocity, while that the exothermic peak of which appears at a lower temperature has a larger crystallization velocity. For example, the exothermic peak of polybutylene terephthalate resin on the market which is heat melted and subsequently quenched appears at about 50 °C, while that of polyethylene terephthalate resin on the market which is heat melted and subsequently quenched appears at about 128 °C. On the other hand, in case of ethylene terephthalate -ethylene isophthalate copolyester resin, which is used in a 2 piece can (a can of which body wall part and bottom part is formed in 1 piece) made of a metal sheet covered with a polyester resin film on the market, the exothermic peak appears at about 177 °C.

In the present invention, a biaxially oriented film of a polyethylene terephthalate resin having a low temperature crystallization temperature exceeding 165 °C or less than 130 °C can be heat bonded to a metal sheet, however, a metal sheet covered with a polyethylene terephthalate resin having an orientation structure suitable for the compatibility of adhesion and formability with permeation resistance and impact resistance can be obtained by heat bonding a biaxially oriented film of a polyethylene terephthalate resin having a low temperature crystallization temperature of 130 to 165 °C to a metal sheet.

In the present invention, a biaxially oriented film of any resin of polyethylene terephthalate, polybutylene terephthalate, copolyester mainly consisting of ethylene terephthalate recurring unit, or that mainly consisting of ethylene isophthalate recurring unit, that of a blended polyester resin consisting of at least 2 of these resins, or a multi-layered polyester resin film manufactured by lamination of at least 2 of these resins can be employed. Furthermore, in case where impact resistance is required, a biaxially oriented film of bis-phenol A polycarbonate resin blended with the above- described polyester resin, or a multi-layered resin film consisting of the uppermost and the lowermost layers of the above-described polyester resin and the intermediate layer of the bis-phenol A polycarbonate resin blended with the above-described polyester resin or the bis-phenol A polycarbonate can also be employed.

The thickness of the biaxially oriented polyethylene terephthalate resin film is preferably 5 to 50 µm, more preferably 10 to 30 µm. When a film having a thickness of less than 5 µm is heat bonded to a metal sheet, wrinkles are apt to be caused and it is extremely difficult to stably cover the film on the metal sheet. On the other hand, when using a film having a thickness of more than 50 µm, the necessary characteristics can be attained but it is not profitable to economy. A colored film, produced by adding color pigment into molten polyethylene terephthalate when the film is manufactured, can also be employed.

In the present invention, it is essential that the true stress measured at 75 °C is 3.0 to 15.0 kg/mm ², corresponding to a true strain of 1.0 in the mechanical characteristics of the polyester resin film having biaxial orientation obtained by chemically dissolving only the metal sheet from the polyester resin covered metal sheet. It is the objective of the present invention that the polyester resin covered metal sheet having excellent formability is adapted to the use of severe forming such as drawing, drawing and ironing, drawing and stretch forming, and ironing after drawing and stretch forming. It is particularly essential that the polyester resin film covered metal sheet has excellent formability in the use of the high degree forming such as drawing and stretch forming, and ironing after drawing and stretch forming. Furthermore, this severe forming is practiced at the temperature higher than the glass transition temperature of the polyester resin in order to enhance the formability of the polyester resin film. In the present invention, extremely excellent formability adaptable to the use of the severe forming such as drawing and stretch forming, and ironing after drawing and stretch forming can be obtained in a case where the following orientation structure after heat bonding is attained, that is the structure in which the true stress is 3.0 to 15.0 kg/mm ², corresponding to a true strain of 1.0, when measured using a tensile tester at 75 °C that is higher than the glass transition temperature of the polyester resin in the tensile characteristics of the polyester resin film having biaxial orientation obtained by chemically dissolving only the metal sheet from the polyester resin covered metal sheet after a biaxially oriented polyester resin film has been heat bonded to a metal sheet.

The manner of heat bonding of a biaxially oriented polyester resin film to a metal sheet will be described later. Hereinafter, the measuring method of true strain and true stress of the polyester resin film having biaxial orientation peeled off from the above described polyester resin film covered metal sheet will be explained. After immersing the polyester resin film covered metal sheet into a hydrochloric acid solution, chemically dissolving the metal sheet and peeling off the polyester resin film alone, the test piece for the tensile test having a width of 5 mm and a length of 50 to 60 mm is prepared. After that, the nominal stress-elongation curve is measured of the test piece using a tensile tester at the environmental temperature of 75 °C under the conditions of the cross head distance of 20 mm and the speed of testing rate of stressing, from which the nominal stress σ ₀ and the elongation El are obtained. The elongation El can be calculated by the following formula: $E l = 100 \times ( L - L 0 )$
wherein
L 0 : the length of a test piece before stressing
L : the length of a test piece after stressing
true strain ε a and true stress σ a can be obtained from the following formulas, respectively. $ε a = ε / ( 1 + ε )$ $σ a = {σ}_{0} / ( 1 + ε )$
wherein
ε : strain $ϵ = E 1 / 100$
The value of the true stress corresponding to a true strain of 1.0 can be read in the true strain-true stress curve prepared by plotting the true stress and the true strain obtained as described above.

In the present invention, the true stress of 3.0 to 15.0 kg/mm ² corresponding to a true strain of 1.0 is obtained as described above. In the case where the true stress is less than 3.0 kg/mm ², uniform forming can not be practiced in the drawing because the friction coefficient between the resin film and the blank holder or forming tool such as the punch becomes extremely high and severe unevenness is caused on the resin film and the metal sheet. Furthermore, the permeation resistance of the resin film is extremely decreased, which causes corrosion of the metal sheet in some cases where the resin film covered metal sheet is formed into a drawn can and the content is packed in it and then stored for a certain period of time, that is unfavorable. On the other hand, in case where the true stress exceeds 15.0 kg/mm ², the resin film is peeled off or numerous cracks are generated in the film when severe forming such as drawing and stretch forming or ironing after drawing and stretch forming is practiced, and the metal sheet can not completely be covered with the resin film.

Furthermore, in case where the adhesion after forming of the above-mentioned polyester resin film having biaxial orientation to a metal sheet is not enough or in case where the lamination of one of these polyester resin films alone can not attain sufficient corrosion resistance and impact resistance, the following methods are required : a polyester resin film is laminated to a metal sheet after a thermosetting adhesive such as phenol- epoxy adhesive is coated on to a surface of the metal sheet and dried, or the polyester resin film surface which is to be laminated to a metal sheet is previously coated with the thermosetting adhesive and dried, followed by lamination to the metal sheet. However, the laminating method employing the adhesive is unfavorable except in case of necessity since it incurs extra cost and it also requires a measure to counter environmental pollution by the solvent contained in the adhesive.

Next, a metal sheet used for a polyethylene terephthalate covered metal sheet of the present invention will be explained. A surface treated strip or sheet of steel or aluminum alloy is used as a metal sheet. In case where a steel sheet is used, it is not necessary to define the chemical composition of the steel as far as the aforementioned severe forming can be practiced. The low carbon steel sheet having a thickness of 0.15 to 0.30 mm is preferably used. In order to produce excellent adhesion after forming of a polyethylene terephthalate film covered steel sheet, it is more preferable to use a steel sheet having a coating of hydrated chromium oxide, a double layered coating consisting of a lower layer of metallic chromium and an upper layer of hydrated chromium oxide in particular, on the surface, that is tin free steel (TFS). The steel sheet having a plating of one metal selected from tin, nickel or aluminum, a double layered plating or an alloy plating of more than one metal selected from those 3 metals, and further having the above- mentioned double layered coating can also be used. In case where an aluminum alloy sheet is used, it is not necessary to define the chemical composition of the aluminum alloy as far as the aforementioned severe forming can be practiced as with the case of the steel. The aluminum alloy sheet of JIS 3000 series or 5000 series is preferably used with a view to economy and formability. It is more preferable to use an aluminum alloy sheet which is surface treated by known a method such as electrolytical treatment or dipping treatment in chromic acid solution, etching in alkali solution or acid solution, or anodic oxidization. In case where the above- mentioned double layered coating consisting of a lower layer of metallic chromium and an upper layer of hydrated chromium oxide is formed on the sheet of steel or aluminum, the coating weight of the hydrated chromium oxide is preferably 3 to 50 mg/m ² as chromium, more preferably 7 to 25 mg/m ² as chromium, in view of adhesion after forming of the covering resin film. It is unnecessary to define the coating weight of the metallic chromium, however, it is preferably 10 to 200 mg/m ², more preferably 30 to 100 mg/m ², in view of corrosion resistance after forming and adhesion after forming of the covering resin film.

Further next, the covering method of the biaxially oriented polyester resin film of the present invention will be explained below.

The covering method consists of
heating a metal strip continuously supplied from a means of the metal strip supply to the temperature range above the melting temperature of the polyester resin by a heating means,
contacting a biaxially oriented film of polyester resin supplied from a means of the film supply on one side or both sides of the metal strip,
putting them together between a pair of laminating rolls,
pinching and pressing them, and quenching immediately after that. In the series of this process, the film of polyester resin is heated by heat conducted from the metal strip, the polyester resin at the contacting portion with the metal strip melts, and the biaxial orientation of the film is more lost in the portion nearer to the contacting portion with the metal strip, while the biaxial orientation of the film is more retained in the portion nearer to the uppermost surface free from contact with the metal strip since the uppermost surface of the film, opposite from the contacting surface with the metal strip, contacts the laminating roll which cools the film. The orientation structure of the film after being applied to the metal strip changes into a more preferable one by controlling the cooling rate immediately after lamination determined by the temperature of the metal strip and the laminating roll, the period of time during which the metal strip contacts the laminating roll, which corresponds to the feeding speed of the metal strip, and the length of the contacting portion of the resin covered metal sheet with the laminating roll (nip : determined by diameter of the laminating roll and the elasticity modulus of the roll). The higher the temperature of the metal strip and the laminating roll, the greater the feeding speed of the metal strip and the shorter the nip length, the greater the film is heated and the more the biaxial orientation of the whole film is lost.

In the above- mentioned covering method of the present invention, the orientation structure after the lamination, in which the biaxial orientation of the film is more lost in the portion nearer to the contacting portion with the metal strip, while it is more retained in the portion nearer to the uppermost free surface not contacting with the metal strip, can be obtained by controlling the cooling rate immediately after the lamination and cooling at a rate of 600 °C/second or more. In case of the cooling rate of less than 600 °C/second, the metal strip is not sufficiently cooled and the film is excessively heated, which causes the biaxial orientation to be lost to a larger extent and improves formability, but reduces the impact resistance when the resin covered metal sheet is heated after forming.

In the present invention, a thermosetting resin such as an epoxy resin can be intervened between the film and the metal strip when the above-described biaxially oriented polyester resin film is heat bonded to a metal sheet.

Hereinafter, the present invention is explained more in detail by referring to the example.

### Example

The strip of TFS (amount of metallic chromium : 110 mg/m², the amount of chromium hydroxide : 14 mg/m² as chromium) having a thickness of 0.18 mm and a temper of DR-10 continuously supplied from the means of metal strip supply was heated to the temperatures shown in Tables 1 to 3 by contacting to some heating rolls and contacted on both sides with the various biaxially oriented polyester resin films shown below supplied from the film supplying roll. After that, both members were laminated, pinched and bonded together between a pair of laminating rolls having the temperatures shown in Tables 1 to 3, and then quenched at the cooling rates shown in Tables 1 to 3. The cooling rate after the heat bonding was controlled by changing the nip length using laminating rolls having several diameters. The laminated biaxially oriented polyester resin films were biaxially oriented films having a thickness of 25 µm manufactured from polyethylene terephthalate resin having various low temperature crystallization temperatures shown in Tables 1 to 3 (hereinafter referred to as PET) copolyester resin consisting of 88 mole % of ethylene terephthalate and 12 mole % of ethylene isophthalate (hereinafter referred to as PETI), blended resin consisting of polyethylene terephthalate resin and polybutylene terephthalate resin blended at the weight ratio of 1 : 0.6 (hereinafter referred to as PET+PBT), and those having a thickness of 25 µm (thickness of lower layer film : 20 µm, that of upper layer film : 5 µm) manufactured from blended resin consisting of copolyester resin composed of 94 mole % of ethylene terephthalate and 6 mole % of ethylene isophthalate and polybutylene terephthalate resin blended at the weight ratio of 0.8 : 1 as the lower layer, and copolyester resin consisting of 88 mole % of ethylene terephthalate and 12 mole % of ethylene isophthalate as the upper layer (hereinafter referred to as PES/PETI). Various polyester resin films were obtained by immersing parts of the metal sheets covered with the above- described polyester resins into hydrochloric acid solution and only dissolving the TFS substratum alone. Then they were made into test pieces for the tensile test having a width of 5 mm and a length of 50 to 60 mm. These test pieces were tested using the tensile tester at the environmental temperature of 75 °C under the conditions of a cross head distance of 20 mm and a stress rate of 200 mm/minute. In this manner, the nominal stress - elongation curves were measured, true strain - true stress curves were calculated, and values of the true stress corresponding to a true strain of 1.0 at 75 °C were obtained.

In addition, the resin covered metal sheets produced under the same laminating conditions as those used for the above-mentioned measurement of the film properties were formed in the manner described below.

At first, the resin covered metal sheets were punched out into circular blanks having a diameter of 160 mm and then they were formed into drawn cans having a diameter of 100 mm. After that, they were formed into redrawn cans having a diameter of 80 mm by redrawing. These redrawn cans were formed into drawn and stretch formed and ironed cans having a diameter of 66 mm by a composite forming consisting of simultaneous drawing and stretch forming and ironing. This composite forming was practiced under the conditions that
the clearance between drawing portion, which corresponds to the upper edge part of the can, and ironing portion was 20 mm,
curvature radius in a corner of dies for redrawing process was 1.5 times the thickness of the resin covered metal sheet,
the clearance between the redrawing dies and the punch was 1.0 times the thickness of the resin covered metal sheet, and
the clearance between the ironing portion of the redrawing dies and the punch was 50 % of the thickness of the resin covered metal sheet. After that, the upper edge part of the can was trimmed off by a known method, then they were shaped by necked- in forming and flange forming.
The peeling- off of the resin layer at the wall portion of the thus produced can body was evaluated by the method described below. Further, the impact resistance of the resin film on the inside of the can body was evaluated by the method described below. (I) Peeling- off of the resin layer from the can wall portion

The degree of peeling- off of the resin layer from the can wall portion of the inside and outside of the produced can body was observed by the naked eye and evaluated based on the following standard.
⊚ : no peeling- off
○ : slightly peeled off but no problem for practical use
△ : heavily peeled off
× : peeled off at the whole upper portion of the can body

### (II) Impact resistance of the resin film on the inside of the can body

At first, water was filled into the produced can and the lid was corked. Then, the can was dropped on the bottom from a height of 15 cm. After it was opened and the water was taken out, 3 % sodium chloride solution was filled in and a rod of stainless steel as a cathode was immersed in it. After that, a voltage of about 6.3 volts was charged between the cathode and the can body as an anode. At this voltage charging, in case where even if the metal substratum under the resin layer is slightly exposed, a current flows. The degree of the metal exposure was evaluated by the current value (mA). The results of the evaluation are shown in Tables 4 to 6 together with the values of true stress corresponding to true strain of 1.0 measured at 75 °C.

### Table 1

Characteristics of polyester resins and laminating conditions (1)

| Sample number | Resin film | | Covering conditions of resin film | | |
|---|---|---|---|---|---|
| | Resin composition | L.T.C.* temperature (° C) | Heating temperature of metal sheet (° C) | Temperature of laminating (° C) | Cooling rate after lamination (° C/sec) |
| 1 | PET | 128 | 310 | 150 | 587 |
| 2 | PET | 128 | 280 | 150 | 637 |
| 3 | PET | 128 | 270 | 150 | 650 |
| 4 | PET | 128 | 280 | 150 | 637 |
| 5 | PET | 128 | 290 | 150 | 619 |
| 6 | PET | 128 | 300 | 150 | 603 |
| 7 | PET | 128 | 310 | 150 | 587 |
| 8 | PET | 130 | 290 | 150 | 619 |
| 9 | PET | 140 | 270 | 150 | 650 |
| 10 | PET | 140 | 280 | 150 | 637 |

| | | | | | |
|---|---|---|---|---|---|
| Remarks: L.T.C.* Low temperature crystallization | | | | | |

**Table 2 Characteristics of polyester resins and laminating conditions (2)**

| Sample number | Resin film | | Covering conditions of resin film | | |
|---|---|---|---|---|---|
| | Resin composition | L.T.C.* temperature (° C) | Heating temperature of metal sheet (° C) | Temperature of laminating (° C) | Cooling rate after lamination (° C/sec) |
| 11 | PET | 140 | 290 | 150 | 619 |
| 12 | PET | 140 | 300 | 150 | 603 |
| 13 | PET | 140 | 310 | 150 | 587 |
| 14 | PET | 155 | 270 | 150 | 650 |
| 15 | PET | 155 | 280 | 150 | 637 |
| 16 | PET | 155 | 290 | 150 | 619 |
| 17 | PET | 155 | 300 | 150 | 603 |
| 18 | PET | 155 | 310 | 150 | 587 |
| 19 | PET | 165 | 290 | 150 | 619 |
| 20 | PETI | 177 | 245 | 120 | 655 |

| | | | | | |
|---|---|---|---|---|---|
| Remarks: L.T.C.* Low temperature crystallization | | | | | |

**Table 3 Characteristics of polyester resins and laminating conditions (3)**

| Sample number | Resin film | | Covering conditions of resin film | | |
|---|---|---|---|---|---|
| | Resin composition | L.T.C.* temperature (° C) | Heating temperature of metal sheet (° C) | Temperature of laminating (° C) | Cooling rate after lamination (° C/sec) |
| 21 | PET+PBT | 140 | 290 | 150 | 619 |
| 22 | PES/PETI | 140 | 300 | 150 | 603 |

| | | | | | |
|---|---|---|---|---|---|
| Remarks : L.T.C.* Low temperature crystallization | | | | | |

**Table 4 Evaluation result of properties of resin covered metal sheet (1)**

| Sample number | True stress corresponding to true strain of 1.0 measured at 75° C (kg/mm ²) | Evaluation of covered metal sheet | | Item |
|---|---|---|---|---|
| | | Peeling-off of film (by naked eye) | Impact resistance (mA) | |
| 1 | 2.1 | ⊚ | 0.95 | Comp.Ex.^{#} |
| 2 | 13.9 | ○ | 0.01 | Example |
| 3 | 17.2 | × | unmeasured | Comp.Ex.^{#} |
| 4 | 14.7 | ○ | 0.00 | Example |
| 5 | 10.2 | ○ | 0.00 | Example |
| 6 | 3.4 | ⊚ | 0.09 | Example |
| 7 | 2.3 | ⊚ | 0.85 | Comp.Ex.^{#} |
| 8 | 9.3 | ⊚ | 0.00 | Example |
| 9 | 16.5 | △ | 0.00 | Comp.Ex.^{#} |
| 10 | 14.3 | ○ | 0.00 | Example |

| | | | | |
|---|---|---|---|---|
| Remarks : Comp.Ex.^{#} Comparative Example | | | | |

**Table 5 Evaluation result of properties of resin covered metal sheet (2)**

| Sample number | True stress corresponding to true strain of 1.0 measured at 75° C (kg/mm ²) | Evaluation of covered metal sheet | | Item |
|---|---|---|---|---|
| | | Peeling-off of film (by naked eye) | Impact resistance (mA) | |
| 11 | 9.1 | ⊚ | 0.00 | Example |
| 12 | 3.4 | ⊚ | 0.08 | Example |
| 13 | 2.6 | ⊚ | 0.53 | Comp.Ex.^{#} |
| 14 | 16.8 | △ | 0.00 | Comp.Ex.^{#} |
| 15 | 14.4 | ○ | 0.00 | Example |
| 16 | 9.4 | ⊚ | 0.00 | Example |
| 17 | 3.3 | ⊚ | 0.09 | Example |
| 18 | 2.1 | ⊚ | 0.49 | Comp.Ex.^{#} |
| 19 | 8.9 | ⊚ | 0.00 | Example |
| 20 | 14.7 | ⊚ | 0.00 | Example |

| | | | | |
|---|---|---|---|---|
| Remarks : Comp.Ex.^{#} Comparative Example | | | | |

**Table 6 Evaluation result of properties of resin covered metal sheet (3)**

| Sample number | True stress corresponding to true strain of 1.0 measured at 75 ° C (kg/mm ²) | Evaluation of covered metal sheet | | Item |
|---|---|---|---|---|
| | | Peeling-off of film (by naked eye) | Impact resistance (mA) | |
| 21 | 11.3 | ⊚ | 0.01 | Example |
| 22 | 7.5 | ⊚ | 0.00 | Example |

| | | | | |
|---|---|---|---|---|
| Remarks : Comp.Ex.^{#} Comparative Example | | | | |

As can be seen in Tables 4 to 6, the metal sheet covered with a polyester resin film having a true stress of 3.0 to 15.0 kg/mm ² corresponding to a true strain of 1.0 measured at 75 °C has excellent adhesion after forming and impact resistance.

### Effect of invention

The polyester resin film covered metal sheet of the present invention, in which the polyester resin film having biaxial orientation obtained by chemically dissolving only the metal sheet from the polyester resin film covered metal sheet has a true stress of 3.0 to 15.0 kg/mm ² corresponding to a true strain of 1.0 measured at 75 °C in the mechanical property, is produced by contacting the above-described biaxially oriented polyester resin film to a metal sheet heated to a temperature of more than the melting temperature of the above- described polyester resin, pinching and press bonding both members with a pair of laminating rolls, and cooling the metal sheet at a cooling rate of more than 600 °C/second in this laminating process with a nip formed in the above- described laminating roll. The thus produced polyester resin film covered metal sheet can reconcile adhesion after forming and impact resistance of the polyester resin film and can be adapted to the use of severe forming such as drawing, drawing and ironing, and drawing and stretch forming as well as ironing after drawing and stretch forming.

## Claims

1. A metal sheet covered with a polyester resin film having biaxial orientation, wherein a polyester resin film having biaxial orientation, which is obtained from said metal sheet covered with a polyester resin film having biaxial orientation by chemically dissolving only said metal sheet, has a true stress of 3.0 to 15.0 kg/mm² measured at 75 °C, corresponding to a true strain of 1.0, in the mechanical characteristics, the metal sheet covered with said polyester resin film having biaxial orientation being obtainable by a method in which said metal sheet is cooled by a nip formed by a pair of laminating rolls at a cooling rate of 600 °C/second or more when a biaxially oriented polyester resin film is contacted with said metal sheet heated to a temperature of more than the melting temperature of said polyester resin and both said metal sheet and said polyester resin film are pinched and pressed into a laminate by said pair of laminating rolls.

2. The metal sheet covered with a polyester resin film having biaxial orientation according to claim 1, wherein said polyester resin is polyethylene terephthalate resin.

3. The metal sheet covered with a polyester resin film having biaxial orientation according to claim 2, wherein said polyethylene terephthalate resin is a polyethylene terephthalate resin having a low temperature crystallization temperature of 130 to 165 °C.

4. The metal sheet covered with a polyester resin film having biaxial orientation according to claim 3, wherein said polyethylene terephthalate resin is a polyethylene terephthalate resin having a low temperature crystallization temperature of 140 to 155 °C.

5. The metal sheet covered with a polyester resin film having biaxial orientation according to claim 1, wherein said polyester resin is a copolyester resin mainly consisting of ethylene terephthalate recurring units, a copolyester resin mainly consisting of butylene terephthalate recurring units, or a blended copolyester resin consisting of at least 2 of these resins, or a double layered polyester resin consisting of a laminate of at least 2 of these resins.

6. A method of preparing the metal sheet covered with a polyester resin film having biaxial orientation according to any claim 1 to 5, wherein said metal sheet is cooled by a nip formed by a pair of laminating rolls at a cooling rate of 600 °C/second or more when a biaxially oriented polyester resin film is contacted with said metal sheet heated to a temperature of more than the melting temperature of said polyester resin and both said metal sheet and said polyester resin film are pinched and pressed into a laminate by said pair of laminating rolls.

## Patentansprüche

1. Metallblech, das mit einer biaxial orientierten Polyesterharzfolie bedeckt ist, wobei eine biaxial orientierte Polyesterharzfolie, die von dem Metallblech, das mit einer biaxial orientierten Polyesterharzfolie bedeckt ist, durch chemisches Auflösen nur des Metallblechs erhalten wird, aus mechanischen Eigenschaften eine wahre Spannung von 3,0 bis 15,0 kg/mm², gemessen bei 75 °C, bei einem entsprechenden Umformungsgrad von 1,0 aufweist, wobei das Metallblech, das mit der biaxial orientierten Polyesterharzfolie bedeckt ist, erhältlich ist durch ein Verfahren, in welchem das Metallblech durch einen Walzenspalt, gebildet durch ein Paar Laminierwalzen, bei einer Abkühlungsrate von 600 °C/Sekunde oder mehr abgekühlt wird, während eine biaxial orientierte Polyesterharzfolie mit dem Metallblech, welches auf eine Temperatur erwärmt ist, die höher ist als der Schmelzpunkt des Polyesterharzes, in Kontakt gebracht wird, und sowohl das Metallblech als auch die Polyesterharzfolie durch das Paar Laminierwalzen zu einem Laminat gequetscht und gepresst werden.

2. Metallblech, das mit einer biaxial orientierten Polyesterharzfolie bedeckt ist, gemäß Anspruch 1, wobei das Polyesterharz Polyethylenterephthalatharz ist.

3. Metallblech, das mit einer biaxial orientierten Polyesterharzfolie bedeckt ist, gemäß Anspruch 2, wobei das Polyethylenterephthalatharz ein Polyethylenterephthalatharz mit einer Temperatur von Niedertemperaturkristallisation von 130 bis 165 °C ist.

4. Metallblech, das mit einer biaxial orientierten Polyesterharzfolie bedeckt ist, gemäß Anspruch 3, wobei das Polyethylenterephthalatharz ein Polyethylenterephthalatharz mit einer Temperatur von Niedertemperaturkristallisation von 140 bis 155 °C ist.

5. Metallblech, das mit einer biaxial orientierten Polyesterharzfolie bedeckt ist, gemäß Anspruch 1, wobei das Polyesterharz ein Copolyesterharz, welches hauptsächlich aus Ethylenterephthalat-Wiederholungseinheiten besteht, ein Copolyesterharz, welches hauptsächlich aus Butylenterephthalat-Wiederholungseinheiten besteht, oder ein gemischtes Copolyesterharz, welches aus mindestens zwei dieser Harze besteht, oder ein doppelschichtiges Polyesterharz, welches aus einem Laminat aus mindestens zwei dieser Harze besteht, ist.

6. Verfahren zur Herstellung des Metallblechs, das mit einer biaxial orientierten Polyesterharzfolie bedeckt ist, gemäß einem der Ansprüche 1 bis 5, wobei das Metallblech durch einen Walzenspalt, gebildet durch ein Paar Laminierwalzen, bei einer Abkühlungsrate von 600 °C/Sekunde oder mehr abgekühlt wird, während eine biaxial orientierte Polyesterharzfolie mit dem Metallblech, welches auf eine Temperatur erwärmt ist, die höher ist als der Schmelzpunkt des Polyesterharzes, in Kontakt gebracht wird, und sowohl das Metallblech als auch die Polyesterharzfolie durch das Paar Laminierwalzen zu einem Laminat gequetscht und gepresst werden.

## Revendications

1. Tôle métallique recouverte d'un film en résine de polyester ayant une orientation biaxiale, dans laquelle un film en résine de polyester ayant une orientation biaxiale, qui est obtenu à partir de ladite tôle métallique recouverte d'un film en résine de polyester ayant une orientation biaxiale par dissolution chimique uniquement de ladite tôle métallique, a une contrainte réelle de 3,0 à 15,0 kg/mm² mesurée à 75°C, correspondant à une déformation réelle de 1,0, parmi ses caractéristiques mécaniques, la tôle métallique recouverte dudit film en résine de polyester ayant une orientation biaxiale pouvant être obtenue par un procédé dans lequel ladite tôle métallique est' refroidie par un espace formé par une paire de rouleaux de stratification à une vitesse de refroidissement de 600°C/seconde ou plus quand un film en résine de polyester à orientation biaxiale est mis en contact avec ladite tôle métallique chauffée à une température supérieure au point de fusion de ladite résine de polyester et ladite tôle métallique et ledit film en résine de polyester sont tous deux pincés et pressés en un stratifié par ladite paire de rouleaux de stratification.

2. Tôle métallique recouverte d'un film en résine de polyester ayant une orientation biaxiale selon la revendication 1, dans laquelle ladite résine de polyester est une résine de poly(téréphtalate d'éthylène).

3. Tôle métallique recouverte d'un film en résine de polyester ayant une orientation biaxiale selon la revendication 2, dans laquelle ladite résine de poly(téréphtalate d'éthylène) est une résine de poly(téréphtalate d'éthylène) ayant une température de cristallisation à basse température de 130 à 165°C.

4. Tôle métallique recouverte d'un film en résine de polyester ayant une orientation biaxiale selon la revendication 3, dans laquelle ladite résine de poly(téréphtalate d'éthylène) est une résine de poly(téréphtalate d'éthylène) ayant une température de cristallisation à basse température de 140 à 155°C.

5. Tôle métallique recouverte d'un film en résine de polyester ayant une orientation biaxiale selon la revendication 1, dans laquelle ladite résine de polyester est une résine de copolyester constituée principalement de motifs récurrents de téréphtalate d'éthylène, une résine de copolyester constituée principalement de motifs récurrents de téréphtalate de butylène, ou une résine de copolyester mélangée constituée d'au moins 2 de ces résines, ou une résine de polyester double couche constituée d'un stratifié d'au moins 2 de ces résines.

6. Procédé pour préparer la tôle métallique recouverte d'un film en résine de polyester ayant une orientation biaxiale selon l'une quelconque des revendications 1 à 5, dans lequel ladite tôle métallique est refroidie par un espace formé par une paire de rouleaux de stratification à une vitesse de refroidissement de 600°C/seconde ou plus quand un film en résine de polyester à orientation biaxiale est mis en contact avec ladite tôle métallique chauffée à une température supérieure au point de fusion de ladite résine de polyester et ladite tôle métallique et ledit film en résine de polyester sont tous deux pincés et pressés en un stratifié par ladite paire de rouleaux de stratification.
